(19) Europäisches Patentamt
European Patent Office
Office européen des brevets

(11) **EP 2 955 162 B1**

(12) **EUROPÄISCHE PATENTSCHRIFT**

(45) Veröffentlichungstag und Bekanntmachung des Hinweises auf die Patenterteilung:
**03.07.2019   Patentblatt 2019/27**

(51) Int Cl.:
***C03B 5/187*** *(2006.01)*     ***C03B 5/20*** *(2006.01)*

(21) Anmeldenummer: **15169974.1**

(22) Anmeldetag: **29.05.2015**

(54) **VERFAHREN ZUR HERSTELLUNG EINES GLASARTIKELS AUS EINER GLASSCHMELZE**

METHOD FOR PRODUCING A GLASS ARTICLE FROM A GLASS MELT

PROCÉDÉ DE FABRICATION D'UN ARTICLE EN VERRE À PARTIR DE VERRE EN FUSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2014   DE 102014211346**

(43) Veröffentlichungstag der Anmeldung:
**16.12.2015   Patentblatt 2015/51**

(73) Patentinhaber: **Schott AG**
**55122 Mainz (DE)**

(72) Erfinder:
  • **Lentes, Frank-Thomas**
    **55411 Bingen (DE)**
  • **Naumann, Karin**
    **55270 Ober-Olm (DE)**
  • **Bürkner-Brigaldino, Monika**
    **65462 Ginsheim-Gustavsburg (DE)**
  • **Greulich-Hickmann, Norbert**
    **55127 Mainz (DE)**
  • **Steigleder, Jan Philipp**
    **55257 Budenheim (DE)**

(56) Entgegenhaltungen:
  **EP-A1- 2 505 562        WO-A2-2011/106605**
  **DE-A1- 19 960 212       DE-A1-102006 060 972**
  **DE-A1-102007 035 203    US-A- 2 871 000**
  **US-A1- 2013 125 591**

**Beschreibung**

Die Erfindung betrifft ein Verfahren zur Herstellung eines Glasartikels aus einer Glasschmelze.

Solche Verfahren sind grundsätzlich, z.B. aus den Schriften DE 10 2006 060 972 A1, DE 10 2007 035 203 A1 bekannt.

Die dabei verwendeten Rührvorrichtungen mit in der Vorrichtung angeordnetem Flügelrührer, sind in der Regel so ausgelegt, dass folgende Bedingungen erfüllt werden:

- Hohe                                Homogenitätszahl

$$H = N \cdot \nu \cdot \frac{\rho n L D^2}{\dot{m}} > 6000,$$ wobei

> N: Anzahl der hintereinandergeschalteten Rührvorrichtungen
> $\nu$: Rührerdrehzahl
> $\rho$: Dichte des Glases
> n: Anzahl der Rührflügel
> L: Innenlänge der Rührvorrichtung
> D: Innendurchmesser der Rührvorrichtung und
> $\dot{m}$: Massenfluss ist.

- Minimierung           der           Wandschubspannung

$$\tau = \eta \cdot \frac{\pi D}{w} \cdot \nu < 500 \text{ Pa}$$

an der Innenwandung der Rührvorrichtung, z.B. aus hochzirkoniumhaltigem, keramischem Feuerfestmaterial, wobei

> $\eta$: Viskosität des Glases
> D: Innendurchmesser der Rührvorrichtung;
> w: Wandabstand (Rührerflügel/Innenwand)
> $\nu$: Drehzahl ist.

Diese Bedingungen werden im Allgemeinen erreicht durch:

- großes Rührvolumen, d.h. große Innendurchmesser D und große Innenbauhöhe L
- maßvolle Drehzahlen des Rührers (3 bis 10 U/min)
- In Verbindung mit einer axial fördernden Rührvorrichtung mit angestellten Rührerflügeln wird erreicht, dass bei einer vergleichsweise langen Verweilzeit der Glasschmelze in der Rührvorrichtung durch eine hohe Dehnung, starke Umorientierung und Auftrennung von sich in der Glasschmelze befindlichen Schlieren (Inhomogenitäten) ein sehr hoher Homogenisierungsgrad der Glasschmelze erreicht werden kann.

Es hat sich herausgestellt, dass die bekannten Verfahren und Vorrichtungen folgende Nachteile aufweisen:

1. Eine vergleichsweise große freie Oberfläche der Glasschmelze in der Rührvorrichtung $A = \frac{\pi}{4} D^2$, die - besonders in Verbindung mit einem brennerbeheizten Oberofen der Rührvorrichtung -, zu einer chemisch veränderten Oberflächenschicht führt (z.B. durch Verdampfung von leichtflüchtigen Bestandteilen der Glasschmelze, "Verdampfungsschicht").

Diese Verdampfungsschicht ist wegen des Verlustes von Bestandteilen der Glasschmelze in der Regel bei Anwendungstemperatur (Temperatur der Glasschmelze im Rührgefäß) zähflüssiger als die übrige Glasschmelze und weist in der Regel bei Anwendungstemperatur auch eine geringfügig höhere Dichte als die übrige Glasschmelze auf.

In jedem Fall aber unterscheiden sich Viskosität und Dichte von Glasschmelze und "Verdampfungsschicht".

(Bei Bestimmung von Viskosität und Dichte ist die Temperaturabhängigkeit zu berücksichtigen, sodaß es bei Raumtemperatur ggf. auch zur Umkehrung der oben beschriebenen Verhältnisse bei Anwendungstemperatur kommen kann).

2. Bekannte Verfahren und Vorrichtungen sind nicht in der Lage, diese zäheren Glasschmelzanteile für sehr hohe Anforderungen an die Homogenität der Glasschmelze wieder aufzulösen und zu verrühren (Homogenisieren).

3. Der oberste, rotierende Rührerflügel, der sich unter der Glasoberfläche befindet, verursacht eine Bugwelle, die an der Innenwandung der Rührvorrichtung zu Schwappbewegungen der Glasschmelze führt;

damit ist mit hoher Wahrscheinlichkeit die Bildung und das Einlappen von unerwünschten Gasblasen in die Glasschmelze verbunden.

Die für die Herstellung von Glas eingesetzten Vorrichtungen, umfassend eine Rührvorrichtung mit in der Rührvorrichtung angeordnetem Flügelrührer, werden zur Verbesserung der großräumigen Volumenhomogenität und klein-räumigen Homogenität (Schlierenfreiheit) der Glasschmelze eingesetzt. Dazu weisen sie eine im Vergleich zu kleindimensionierten Rührvorrichtungen (mit kleineren freien Oberflächen) eine wesentlich längere Verweilzeit der Glasschmelze in der Rührvorrichtung auf. Die freie Oberfläche ist länger der Atmosphäre ausgesetzt, was zu Verdampfung und anderen chemischen Reaktionen und dadurch zu einer Verschlechterung der Homogenität der Glasschmelze und letztendlich des resultierenden Displayglases führen kann.

Oberflächenglasschmelze entsteht durch Verdampfung bestimmter Komponenten bei der Temperatur, bei der gerührt wird. Eine wasserhaltige Ofenatmosphäre fördert die Verdampfung. Die Abreicherung von leicht flüchtigen Komponenten aus der Oberfläche führt in der Regel bei Anwendungstemperatur zu einer zäheren Glasschmelze an der Oberfläche. Bei Anwendungstemperatur können diese Viskositätsunterschiede durch Diffusionsprozesse in der Glasschmelze nicht mehr ausgeglichen werden.

Das Schwappen der Glasschmelze - bedingt durch die Bugwelle des rotierenden Rührerflügels - an der Innenwandung der Rührvorrichtung ist eine gefährliche Quelle für Neublasen in der Glasschmelze, die für die hohen optischen Anforderungen von Spezialglas unbedingt minimiert werden müssen.

Mit zunehmendem Volumen des Rührgefäßes nimmt in der Regel auch die Oberfläche der Glasschmelze im Rührgefäß zu. Insbesondere bei einer zusätzlichen Beheizung der Oberfläche der Glasschmelze im Rührgefäß, z.B. mittels Brennern, kann dies zu einer unerwünschten Veränderung der Zusammensetzung der Glasschmelze an der Oberfläche im Rührgefäß führen. Leichter flüchtige Zusammensetzungskomponenten der Glasschmelze, wie Li, Na, K, B, P, F, Cl, reichern sich ab. Bei der Beheizung der Glasschmelze im Rührgefäß mittels Brennern entstehende Verbrennungsgase, insbesondere $H_2O$, können in die Glasschmelze eingetragen werden und sich so anreichern. Beides führt zu einer unerwünschten Veränderung der Zusammensetzung der Glasschmelze im Rührgefäß, zu Änderungen bzgl. Viskosität und Dichte, zu Inhomogenitäten, die in den nachfolgenden Prozessschritten nicht mehr oder nur noch mit erheblichem Aufwand beseitigt werden können, und letztendlich zu Fehlern (wie zu störenden Schlieren oder Blasen) im herzustellenden Glasartikel, was wiederum zu erheblichen wirtschaftlichen Verlusten führen kann, insbesondere, wenn es auf die optischen Eigenschaften des Glasartikels ankommt.

DE-A-19960212 offenbart eine Rührvorrichtung zur Homogenisierung einer Glasschmelze in Rührtiegeln, welche einen Strombrecher vorsieht, um die nachteiligen Folgen, die mit dem Anreichern der Schmelze mit Siliciumdioxid im Spiegelbereich verbunden sind, zu beseitigen.

US-A-2013/0125591 offenbart ein Verfahren zum Rühren einer Glasschmelze, bei dem zwei hintereinander angeordnete Rührgefäße verwendet werden, in denen jeweils eine Welle mit radial fördernden Schaufeln angeordnet ist.

US-A-2871000 beschreibt eine Vorrichtung zum Rühren einer Glasschmelze mit einer Welle und mehreren konzentrisch auf der Welle angeordneten Scheiben, die Perforationen aufweisen, welche von Scheibe zu Scheibe gegeneinander versetzt sind.

EP-A-2505562 offenbart eine Rührvorrichtung für eine Glasschmelze mit einer Welle, an der mehrere Schaufeln befestigt sind. Die Schaufeln weisen jeweils eine Trägerplatte und eine Zusatzplatte auf, wodurch ein radialer Fluß der Glasschmelze erzeugt wird.

Aufgabe der Erfindung ist es, ein verbessertes Verfahren zur wirtschaftlichen Herstellung eines Glasartikels aus einer Glas-schmelze zu finden.

Erfindungsgemäß wird ein Verfahren zur Lösung dieser Aufgabe vorgeschlagen, das die folgenden Schritte umfasst:

- kontinuierliches Einleiten der Glasschmelze in ein Rührgefäß,
- Rühren der Glasschmelze (11) in dem Rührgefäß (1) mittels wenigstens einem Flügelrührer, wobei der Flügelrührer mehrere Rührflügel (5;6;7;8;9) aufweist, die an einer im Wesentlichen senkrecht im Rührgefäß (1) angeordneten Rührerwelle (4) befestigt sind, wobei der oberste Rührflügel (9) eine Abwärtsströmung der Glasschmelze entlang der Rührerwelle (4) und der unterste Rührflügel (5) eine Aufwärtsströmung der Glasschmelze entlang der Rührerwelle (4) erzeugt,
- kontinuierliches Ausleiten der Glasschmelze aus dem Rührgefäß (1),
- Formen der Glasschmelze unter Erhalt des Glasartikels,
  dadurch gekennzeichnet, dass
- durch das Rühren die Glasschmelze (12), die sich an der
  Oberfläche im Rührgefäß (1) befindet, in das Rührgefäßeingezogen wird, so dass die Bildung einer Oberflächenschicht der Glasschmelze mit einer anderen Zusammensetzung als die Zusammensetzung der eingeleiteten Glasschmelze (11) verhindert oder wenigstens minimiert wird, wobei der oberste Rührflügel (9) derart ausgestaltet und in einem Abstand A1 von der Oberfläche (13) der Glasschmelze im Rührgefäß (1) angeordnet ist, dass im Wesentlichen dadurch das Einziehen bewirkt wird, und
- durch das Rühren der Glasschmelze, die sich an der Oberfläche
  in dem Rührgefäß befindet, eine höchstens um den Faktor 10, vorzugsweise höchstens um den Faktor 5 höhere Durchlaufzeit durch das Rührgefäß aufweist als die übrige, durch das Rührgefäß geleitete Glasschmelze.

Dadurch, dass die Glasschmelze, die sich an der Oberfläche im Rührgefäß befindet, kontinuierlich in das Rührgefäß (insbesondere zur Rührerwelle) eingezogen wird, werden bereits minimale Veränderungen der Zusammensetzung der Glasschmelze an deren Oberfläche ausgeglichen. Die, wenn nur leicht veränderte Oberflächenglasschmelze wird rechtzeitig mit der übrigen Glasschmelze vermischt, so dass sich erst gar keine störenden Inhomogenitäten ausbilden können. Im Wesentlichen hängt es von den Anforderungen an den herzustellenden Glasartikel ab, wie stark durch das Rühren die Glasschmelze, die sich an der Oberfläche im Rührgefäß befindet, in das Rührgefäß, insbesondere zur Rührerwelle, eingezogen werden muss, so dass die Bildung einer Oberflächenschicht der Glasschmelze mit einer anderen Zusammensetzung als die Zusammensetzung der eingeleiteten Glasschmelze verhindert (sehr hohe Anforderungen an die optischen Eigenschaften des Glasartikels) oder wenigstens minimiert (zumindest so, dass der herzustellende Glasartikel insbesondere die optischen Spezifikationen erfüllt) wird.

Bevorzugt wird zwischen benachbarten Rührflügeln, die eine gleichgerichtete Strömung der Glasschmelze entlang der Rührerwelle erzeugen, ein kleinerer Abstand eingestellt wird als zwischen benachbarten Rührflügeln, die eine entgegengerichtete Strömung der Glasschmelze entlang der Rührerwelle erzeugen.

Das kontinuierliche Einleiten der Glasschmelze kann in einem oberen Bereich des Rührgefäßes und das kontinuierliche Ausleiten in einem unteren Bereich des Rührgefäßes erfolgen oder umgekehrt.

Die Viskosität der Glasschmelze liegt zwischen 100 und 300 Pas.

Mehrere Rührgefäße können in Reihe angeordnet sein.

Durch das Rühren kann die Glasschmelze, die sich an der Oberfläche in dem Rührgefäß befindet, eine maximale Amplitude der Auf- und Abbewegung der Glasschmelze an der Oberfläche von höchstens 2%, vorzugsweise höchstens 1% der Glasschmelzhöhe im Rührgefäß bei einer Rührerdrehzahl von 6 U/min bewirken.

Die Rührerdrehzahl kann im Bereich von 0,5 bisw 20 U/min, vorzugsweise 1 bis 15 U/min und besonders bevorzugt 2 bis 10 U/min eingestellt werden.

Das Formen der Glasschmelze kann ein Floaten, ein Ziehen oder ein Walzen der Glasschmelze umfassen.

Die bevorzugte Geometrie einer Vorrichtung zur Durchführung des erfindungsgemäßen Verfahrens ist:

- fünf Rührflügel mit Rautengeometrie,
- Rührkreisdurchmesser des obersten Flügels (9) beträgt < 50 %, bevorzugt < 45% des maximalen Rührkreisdurchmessers,
- Rührflügel (6, 7) haben maximalen Rührkreisdurchmesser Rührkreisdurchmesser von Rührflügel (5, 8) beträgt < 95%, bevorzugt < 90% des maximalen Rührkreisdurchmessers,
- Flügelabstand der obersten drei Flügel (7, 8, 9) beträgt mindestens die Höhe der Raute,
- Oberen drei Rührflügel (7, 8, 9) sind bei linksdrehendem Rührer von oben betrachtet azimutal nach unten um 10° gegen den Uhrzeigersinn versetzt angeordnet und fördern unterstützt mit der Rautengeometrie abwärts,
  wobei der Anstellwinkel der Raute 35° beträgt,
- Bei den unteren zwei Rührflügeln (5, 6) ist Rührflügel (6) zum Rührflügel 7 nicht azimutal versetzt angeordnet und Rührflügel (5) ist zum Rührflügel (6) bei linksdrehendem Rührer von oben betrachtet azimutal um 10° im Uhrzeigersinn versetzt angeordnet. Beide Rührflügel (5, 6) fördern unterstützt durch die Rautengeometrie aufwärts, wobei der Anstellwinkel der Raute 145° beträgt,

- Flügelabstand der untersten zwei Flügel (5, 6) beträgt mindestens der Höhe der Raute,
- Flügelabstand zwischen den abwärts- (7,8,9) und aufwärtsfördernden Rührflügeln (5, 6) ist 50% größer als der Flügelabstand der gleichgerichtet fördernden Rührflügel,
- Oberster Flügel 180 mm unterhalb der Glasschmelzeoberfläche (A1),
- Viskosität der Glasschmelze 140 Pa·s.

Vorzugsweise bestehen die jeweiligen Rührflügel aus zwei Teilflügeln, die eine gemeinsame kolinare Symmetrieachse aufweisen, welche senkrecht zur Rührerwelle hindurch tritt. Der aus zwei Teilflügeln bestehende Rührflügel hat einen definierten Flügeldurchmesser und beschreibt im Rührgefäß einen Rührkreisdurchmesser.
Die beiden Teile des Rührflügels weisen eine Geometrie auf, die die Förderwirkung unterstützen, beispielsweise eine Rautengeometrie, wobei das bevorzugte Verhältnis der Länge der Diagonalen 1:1 bis 1:2 beträgt.

Im Folgenden werden weitere Ausführungsvarianten der Erfindung beschrieben Das Rühren der Glasschmelze erfolgt mittels wenigstens einem im Rührgefäß angeordneten Flügelrührer, dessen Flügel eine die Bewegung und Strömung der Glasschmelze im Rührgefäß beeinflussende Geometrie und Anordnung aufweisen, dass durch das Rühren die Glasschmelze, die sich an der Oberfläche in dem Rührgefäß befindet,

a) eine höchstens um den Faktor 10, vorzugsweise höchstens um den Faktor 5 höhere Durchlaufzeit durch das Rührgefäß aufweist, als die übrige, durch das Rührgefäß geleitete Glasschmelze.

Die Erfinder haben erkannt, dass gemäß Maßnahme a) die Glasschmelze, die sich an der Oberfläche des Rührgefäßes befindet, kontinuierlich mit der übrigen Glasschmelze im Rührgefäß vermischt wird und so die sich an der Oberfläche der Glasschmelze bildenden Inhomogenitäten kontinuierlich aufgelöst und bestmöglich vermischt werden, bevor deren Ausprägung zu groß wird, um die Qualität des resultierenden Glasartikels negativ zu beeinflussen.

Durch das Rühren weist die Glasschmelze, die sich an der Oberfläche in dem Rührgefäß befindet, vorzugsweise eine maximale Amplitude der Auf- und AbBewegung der Glasschmelze an der Oberfläche (Schwappen) von höchstens 20 mm, bevorzugt von höchstens 10 mm und besonders bevorzugt von höchstens 5 mm auf. So kann das Einbringen von Gasblasen an der Oberfläche der Glasschmelze wirkungsvoll reduziert werden (Verringerung der Schwapp-Bewegung).

Bevorzugt wird eine Wandschubspannung von kleiner als 500 Pa, insbesondere von kleiner als 400 Pa im Rührgefäß eingestellt.

Durch das Rührgefäß können vorzugsweise bis zu 100 Tonnen Glasschmelze pro Tag geleitet werden.

Die Durchlaufzeit ist beispielsweise mittels eines Tracer-Test bestimmbar, wobei ein Tracer in die Glasschmelze beim Einleiten der Glasschmelze in das Rührgefäß gegeben wird, gleichzeitig ein anderer Tracer auf die Oberfläche der Glasschmelze in dem Rührgefäß gegeben wird und die Durchlaufzeit beider Tracer an einer Stelle nach dem Ausleiten bestimmt wird.

Erfindungsgemäß kann ein Flachglas, beispielsweise ein Displayglas oder ein Abdeckglas für elektronische Geräte wie Smartphones, Tabletcomputer oder Monitore mit einer maximalen Amplitude der streifenförmigen Höhenschwankungen der Glasoberfläche als Waviness bezeichnet (RMS-Wert des Oberflächenprofils für Strukturbreiten zwischen 0,8 mm und 8 mm; vgl. SEMI D24-2000; Specification for glass substrates used to manufacture flat panel displays 2006), von weniger als 200 nm, bevorzugt von weniger als 100 nm, weiter bevorzugt von weniger als 70nm hergestellt werden.

Die Flügel des Flügelrührers können eine Geometrie und Anordnung aufweisen, dass während des Rührens der Glasschmelze deren Bewegung und Strömung im Rührgefäß derart beeinflusst wird, dass durch das Rühren die Glasschmelze, die sich an der Oberfläche in dem Rührgefäß befindet,

a) eine höchstens um den Faktor 10, vorzugsweise höchstens um den Faktor 5 höhere Durchlaufzeit durch das Rührgefäß aufweist, als die übrige, durch das Rührgefäß geleitete Glasschmelze

Das Rührgefäß kann vorzugsweise aus Feuerfestmaterial, insbesondere aus hochzirkoniumhaltigem Feuerfestmaterial bestehen, oder damit ausgekleidet werden.
Der Flügelrührer kann wenigstens eines der folgenden Merkmale aufweisen, um insbesondere die Durchlaufzeit zu beeinflussen:

- erster Rührflügel von oben hat einen kleineren Flügeldurchmesser als der benachbarte Rührflügel,
- Abstand von Rührflügeln auf der Rührerwelle untereinander gleich oder verschieden,
- Anstellwinkel von Rührflügel gleich oder verschieden zu benachbartem Rührflügel,
- Förderwirkung der Rührflügel nach oben oder nach unten,
- Rührflügel verdreht zum benachbarten Flügel oder nicht verdreht,
- Abstand des ersten Rührflügels von oben zur Oberfläche der Glasschmelze,
- Abstand des ersten Flügels von unten zum Boden der Rührvorrichtung,
- Anzahl der Flügel gerade oder ungerade.

Die beiden Nachteile der bekannten Vorrichtungen und Verfahren, unzureichende Homogenisierung der oberflächennahen Glasschmelze und rührerbedingtes Schwappen der Glasschmelzoberfläche an der Innenwandung sollen beseitigt werden, wobei die anderen Vorteile des Rührers beibehalten werden.

Die Vorrichtungen können folgendes aufweisen bzw. bewirken:

- hohe Viskositätskonstanz (groß- und kleinräumig, d.h. auf räumlichen Skalen von einigen mm bzw. cm),
- geeignet für Floatverfahren,
- Waviness der Glasartikeloberfläche von weniger als 200 nm, bevorzugt von weniger als 100 nm, weiter bevorzugt von weniger als 70 nm,
- ohne nachträgliche Politur (Oberflächenbearbeitung), nur sogenanntes Touch-Polishing für Glasdicken < 1 mm geeignet.

Eine Verdampfung an der Glasschmelz-Oberfläche im Rührgefäß führt zu keiner Beeinträchtigung des Rührergebnisses und das Schwappen der Glasschmelze an der Grenzfläche zum Rührgefäß wird unterdrückt (Vermeidung Risiko Neublasenbildung).

Mittels des erfindungsgemäßen Verfahrens ist es nun insbesondere möglich, Dünnglas mit sehr geringer Waviness und hoher Ebenheit herzustellen, wobei unter Beibehaltung bislang erprobter Eigenschaften das Rührkonzept so modifiziert wurde, dass verhindert wird, dass chemisch veränderte Oberflächenglasschmelze mit höher Viskosität in die bereits gerührte bzw. homogenisierte Glasschmelze gelangen und Ziehstreifen bzw. WavinessProbleme verursachen kann. Je dünner die herzustellenden Glasartikel werden, umso höher werden die Anforderungen an die Homogenität. Kleinste Zusammensetzungs- bzw. Viskositätsinhomogenitäten auf der Oberfläche bilden sich unkontrolliert im Glasartikel ab und verursachen Unebenheiten, Ziehstreifen, Wavinessprobleme oder andere Oberflächeneffekte, die eine nachträgliche und aufwändige Oberflächenbearbeitung oder Politur des Glasartikels notwendig machen. Es reicht also nicht mehr aus nur das Glasschmelzvolumen schlierenfrei zu machen, sondern die Glasschmelze an der Oberfläche im Rührgefäß muss gezielt im Homogenisierungsprozess berücksichtigt werden.

Die Volumenhomogenisierung kann zwar durch größere Rührgefäße deutlich verbessert werden, aber durch größere Rührgefäße steigt auch die freie Oberfläche der Glasschmelze im Rührgefäß an und damit auch die Anfälligkeit für oberflächenbedingte Ziehstreifen oder Wavinessprobleme im resultierenden Glasartikel.

Das erfindungsgemäße Verfahren ist geeignet, sehr hohe Ansprüche an die Glasqualität bzgl. Homogenität und Schlierenfreiheit zu erfüllen, und darüber hinaus in der Lage, die Glasschmelze an der Rührgefäßoberfläche kontinuierlich einzurühren, so dass die Glasschmelzoberfläche dauerhaft ausgetauscht wird und die Bildung einer chemisch veränderten Glasschmelzoberfläche unterdrückt wird.

Überraschenderweise wurde gefunden, dass durch die Erfindung die Ebenheit/Waviness eines erzeugten Dünnglases verbessert werden kann. Das durch den oberen Rührflügel verursachte "Schwappen" des Glasschmelzstandes an der Innenwandung des Rührgefäßes kann vor allem durch die Geometrie der oberen Rührerflügel und insbesondere des obersten verkürzten Rührerflügels stark verringert werden.

Das Verfahren dient insbesondere zur Herstellung von Glasartikeln mit einer hohen klein- und großräumigen Viskositätshomogenität; dazu eignen sich große Rührgefäße besonders,

- weil große Rührgefäße lange Verweilzeiten zur Homogenisierung ermöglichen (lange Verweilzeiten für Dehnen, Umverteilen, Umorientieren, Zerteilen von insbesondere groß- und kleinräumigen Zusammensetzungsinhomogenitäten der Glasschmelze),
- die rührerbedingte Korrosion des aus beispielsweise hochzirkoniumhaltigem Feuerfestmaterial aufgebauten Rührgefäßes durch geringe Drehzahlen und damit geringe Wandschubspannung minimiert wird.

Die Vorrichtung umfassend Rührgefäß und Flügelrührer, ist bevorzugt so ausgelegt, dass folgende Bedingungen erfüllt sind:

- Hohe Homogenitätszahl

$$H = N \cdot \nu \cdot \frac{\rho n L D^2}{\dot{m}} > 6000$$ (N: Anzahl der Rührsysteme; $\nu$: Drehzahl; $\rho$: Dichte des Glases; n: Anzahl der Rührflügel; L: Länge des Rührers; D: Durchmesser des Rührers; $\dot{m}$: Massenfluss)

- Minimierung der Wandschubspannung

$$\tau = \eta \cdot \frac{\pi D}{w} \cdot \nu < 500 \text{ Pa}$$ am Feuerfestmaterial mit > 90 % $ZrO_2$-Anteil

($\eta$: Viskosität des Glases; D: Durchmesser des Rührers; w: Wandabstand; $\nu$: Drehzahl)

- Oberflächen-Volumen-Verhältnis

$$OVR = \frac{A}{V} = \frac{3}{2} \cdot \frac{1}{L}$$ ist damit festgelegt; im Vergleich zu anderen Rührsystemen ist dieses vergleichsweise groß.

Diese Bedingungen werden erreicht durch ein großes Rührvolumen, d.h. großer Durchmesser D und Bauhöhe L und durch maßvolle Drehzahlen.
Die Vorrichtung kann vorzugsweise eine typische Rührerdrehzahl von 6 U/min, aufweisen. Die Geometrie des Rührgefäßes ist vorzugsweise annähernd ein quadratischer Zylinder (D ungefähr L).
Besonders bevorzugt werden die folgenden Merkmale der Erfindung kombiniert:
Laufendes Einziehen der Oberfläche und Minimierung des Schwappens an Innenseite des Rührgefäßes.

Für die Lösung der erfindungsgemäßen Aufgabe gibt es im Wesentlichen zwei gleichwirkende Ansätze:

1. die Oberfläche der Glasschmelze weitestgehend in Ruhe lassen und keine oberflächennahe Glasschmelze ins Volumen bzw. in die Ausleitströmung einzuziehen.
2. die Oberflächenglasschmelze kontinuierlich einziehen, d.h. die Verweilzeit der Glasschmelze an der Oberfläche so gering zu halten, dass sich kein nennenswerter Viskositätsunterschied ausbilden kann.

Ausführungsbeispiele (Bezugszeichen der Figuren 1a bis 4 in Klammern):
Die Figuren zeigen:

Fig. 1a   Vorrichtung 1 von der Seite (Rührflügelstellung quer)
Fig. 1b   Vorrichtung 1 von der Seite (Rührflügelstellung längs)
Fig. 1c   Vorrichtung 1 von der Seite (Rührflügelstellung längs, rautenförmige Rührflügel)
Fig. 1d   Vorrichtung 1 von der Seite (Rührflügelstellung längs, rautenförmige Rührflügel)
Fig. 2    Vorrichtung 1 von der Seite
Fig. 3a   Vorrichtung 1 von oben (Runder Querschnitt des Rührgefäßes, Hängestein)
Fig. 3b   Vorrichtung 1 von oben (Runder Querschnitt des Rührgefäßes, Hängestein)
Fig. 3c   Vorrichtung 1 von oben (achteckiger Querschnitt des Rührgefäßes, Hängestein)
Fig. 3d   Vorrichtung 1 von oben (achteckiger Querschnitt des Rührgefäßes)
Fig. 4    Zwei Vorrichtungen 1 in Reihe geschaltet (Seitenansicht)

Das erfindungsgemäße Verfahren und eine Vorrichtung 1 zur Durchführung des Verfahrens sollen anhand der folgenden Beispiele näher erläutert werden.

Vorrichtung 1 und Verfahren:

Kontinuierliches Einziehen der Glasoberfläche durch physikalische Simulation bestätigt, wird erreicht durch

- Fünf Rührflügel,
- Alle Rührflügel habe eine fördernde Wirkung,
- Die oberen drei Rührflügel sind auf der Rührerwelle um jeweils 10° versetzt angeordnet und fördern abwärts,
- Die Abwärtsförderung wird durch die Geometrie der Rührflügel unterstützt
- Die unteren zwei Rührflügel fördern aufwärts, wobei sie um -10° versetzt angeordnet sind,
- Die Aufwärtsförderung wird durch die Geometrie der Rührflügel unterstützt
- Der Abstand der Rührflügel auf der Rührerwelle zwischen den oberen drei abwärtsfördernden Rührflügeln ist gleich,Der Abstand der Rührflügel auf der Rührerwelle zwischen den unteren zwei aufwärtsfördernden Rührflügeln ist gleich.

- Der Abstand der Rührflügel zwischen den oberen drei und den unteren zwei Rührflügeln, also zwischen den entgegengesetzten Förderrichtungen ist deutlich größer (bis das Zweifache des Abstandes)
- Der Rührkreisdurchmesser des obersten Rührflügels wird auf ca. die Hälfte des Rührkreisdurchmessers der anderen Rührflügel verkürzt und fördert abwärts,
- Der Rührkreisdurchmesser des darunterliegenden ebenfalls abwärtsfördernden Rührflügels ist auf 70 bis 95% des maximalen Rührkreisdurchmessers verkürzt.
- Der Rührkreisdurchmesser des untersten aufwärtsfördernden Rührflügels wird ebenfalls auf 70 bis 95% des maximalen Rührkreisdurchmessers verkürzt, um bei unten einlaufender Glasschmelze das Einfädeln in den Rührkreis zu verbessern,

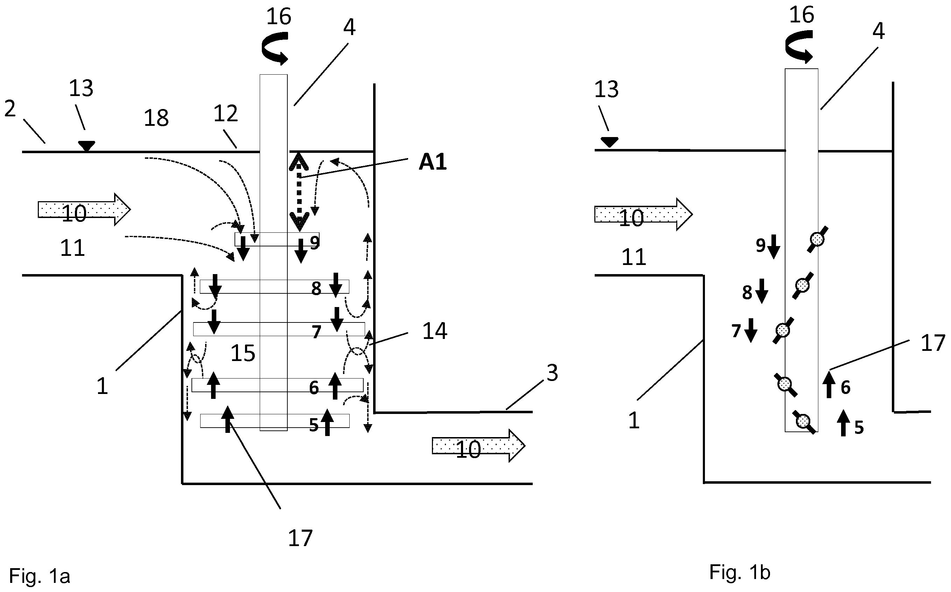

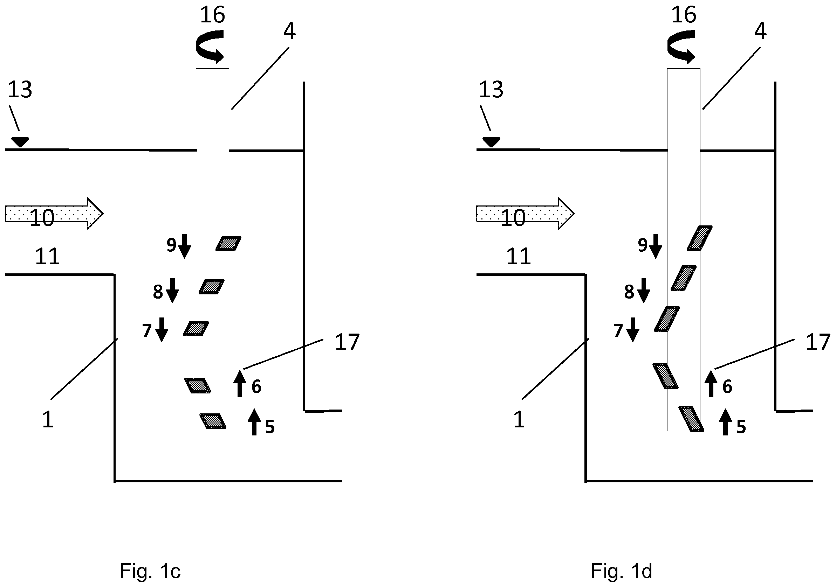

Die Figuren 1a bis 1d zeigen eine Vorrichtung 1 zur Herstellung eines Glasartikels aus einer Glasschmelze (11), umfassend wenigstens folgende Mittel:

- Einlass (2) zum kontinuierlichen Einleiten der Glasschmelze (11) in das Rührgefäß (1),
- Mittel zum Rühren der Glasschmelze in dem Rührgefäß (1) mittels wenigstens einem Flügelrührer, wobei der Flügelrührer fünf Rührflügel (5,6,7,8,9) aufweist, die an einer im Wesentlichen senkrecht im Rührgefäß (1) angeordneten Rührerwelle (4) befestigt sind,
- Auslass (3) zum kontinuierlichen Ausleiten der Glasschmelze (11) aus dem Rührgefäß (1),
- Mittel zum Formen der Glasschmelze unter Erhalt des Glasartikels (nicht dargestellt).

Die Mittel zum Rühren der Glasschmelze sind dabei derart ausgestaltet und angeordnet, dass die Glasschmelze (12), die sich an der Oberfläche im Rührgefäß (1) befindet, in das Rührgefäß (1) eingezogen werden kann, so dass die Bildung einer Oberflächenschicht der Glasschmelze mit einer anderen Zusammensetzung als die Zusammensetzung der eingeleiteten Glasschmelze (11) verhindert oder wenigstens minimiert werden kann.

Der oberste Rührflügel (9) ist dabei derart ausgestaltet und in einem Abstand A1 von der Oberfläche (13) der Glasschmelze (11) im Rührgefäß (1) angeordnet, dass im Wesentlichen dadurch das Einziehen bewirkt wird.

Zur Herstellung eines Glasartikels aus einer Glasschmelze (11) wird die Glasschmelze (11) kontinuierlich in ein Rührgefäß (1) durch einen Einlass (2) eingeleitet. Das Rühren der Glasschmelze (11) in dem Rührgefäß (1) erfolgt mittels einem Flügelrührer, wobei der Flügelrührer fünf Rührflügel (5, 6, 7, 8, 9) aufweist, die an einer im Wesentlichen senkrecht im Rührgefäß (1) angeordneten Rührerwelle (4) befestigt sind. Die Glasschmelze (11) wird kontinuierlich aus dem Rührgefäß (1) durch den Auslass (3) abgeleitet. Das Formen der Glasschmelze (11) unter Erhalt des Glasartikels erfolgt in einem nachgeordneten Verfahrensschritt, z.B. Floaten der Glasschmelze oder Walzen oder Ziehen der Glasschmelze (11). Durch das Rühren wird die Glasschmelze (12), die sich an der Oberfläche im Rührgefäß (1) befindet, in das Rührgefäß eingezogen (obere, gestrichelte Pfeile), so dass die Bildung einer Oberflächenschicht der Glasschmelze mit einer anderen Zusammensetzung als die Zusammensetzung der eingeleiteten Glasschmelze (11) verhindert oder wenigstens minimiert wird. Der oberste Rührflügel (9) ist derart ausgestaltet und in einem Abstand A1 von der Oberfläche (13) der Glasschmelze (11) im Rührgefäß (1) angeordnet, dass im Wesentlichen dadurch das Einziehen bewirkt wird.

Dadurch, dass die Glasschmelze (12), die sich an der Oberfläche im Rührgefäß (1) befindet, in das Rührgefäß (1), insbesondere zur Rührerwelle (4) eingezogen wird, werden bereits minimale Veränderungen der Zusammensetzung der Glasschmelze (12) an deren Oberfläche ausgeglichen. Die, wenn nur leicht veränderte Oberflächenglasschmelze (12) wird rechtzeitig mit der übrigen Glasschmelze (11) vermischt, so dass sich erst gar keine störenden Inhomogenitäten ausbilden können. Im Wesentlichen hängt es von den Anforderungen an den herzustellenden Glasartikel ab, wie stark durch das Rühren die Glasschmelze, die sich an der Oberfläche im Rührgefäß befindet, in das Rührgefäß (1), insbesondere zur Rührerwelle (4), eingezogen werden muss, so dass die Bildung einer Oberflächenschicht der Glasschmelze mit einer anderen Zusammensetzung als die Zusammensetzung der eingeleiteten Glasschmelze (11) verhindert (sehr hohe Anforderungen an die optischen Eigenschaften des Glasartikels) oder wenigstens minimiert (zumindest so, dass der herzustellenden Glasartikel insbesondere die optischen Spezifikationen erfüllt) wird.

Der Flügelrührer weist wie erwähnt mehrere Rührflügel (5, 6, 7, 8, 9) auf, wobei der oberste Rührflügel (9) und die folgenden Rührflügel (7, 8) eine Abwärtsströmung der Glasschmelze entlang der Rührerwelle (4) und der unterste Rührflügel (5) und der darüber angeordnete Rührflügel (6) eine Aufwärtsströmung der Glasschmelze entlang der Rührerwelle (4) erzeugen. Zwischen den benachbarten Rührflügeln (Rührflügel (7, 8, 9) und Rührflügel (5, 6)), die jeweils eine gleichgerichtete Strömung der Glasschmelze (11) entlang der Rührerwelle (4) erzeugen, wird ein kleinerer Abstand eingestellt als zwischen den benachbarten Rührflügeln (5, 6) und (7,8,9), die eine entgegengerichtete Strömung der Glasschmelze (11) entlang der Rührerwelle (4) erzeugen. Der größere Abstand zwischen der entgegengerichteten Förderströmungen ist notwendig, weil dadurch Raum/Volumen geschaffen wird, um die Inhomogenitäten nicht nur zu dehnen sondern sie werden zusätzlich noch umverteilt, umorientiert, was deutlich zur Homogenitätsverbesserung beiträgt.

Die Förderrichtung (17) der Rührflügel (5,6,7,8,9) ist mittels Pfeilen an den Rührflügelenden dargestellt. Der größere Abstand (15) zwischen den Rührflügeln (6,7) ist ebenfalls eingezeichnet.

Die Rührflügel haben eine Rautengeometrie (siehe Fig. 1b), je nach Anordnung der Raute wird damit die entsprechende Ab- bzw. Aufwärtsförderung unterstützt.

Das kontinuierliche Einleiten der Glasschmelze (11) erfolgt in einem oberen Bereich des Rührgefäßes (1) und das kontinuierliche Ausleiten in einem unteren Bereich des Rührgefäßes (1).

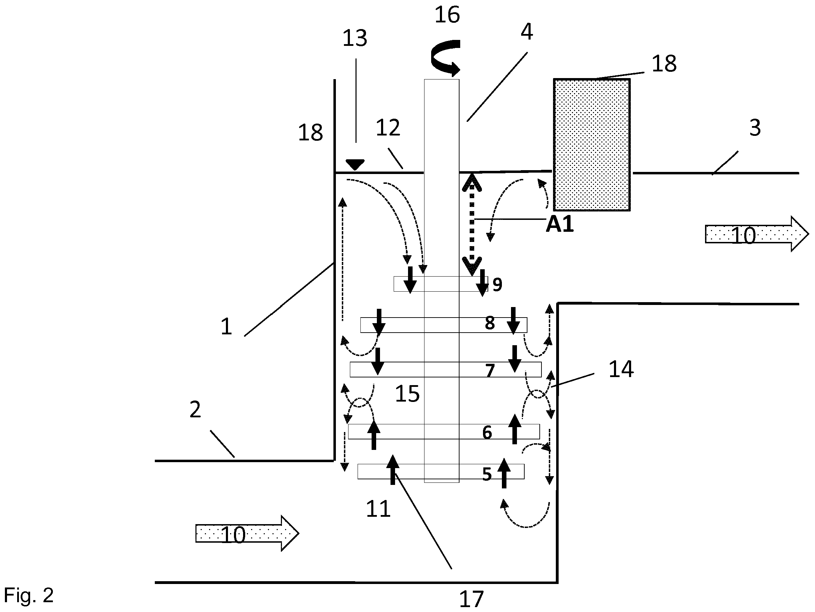

Figur 2 zeigt eine Vorrichtung 1, wobei sich der Einlass (2) im unteren Bereich des Rührgefässes (1) und der Auslass (3) sich im oberen Bereich des Rührgefässes (1) befindet. Im Auslass (3) ist ein sogenannter Hängestein (18) angeordnet, um ein symmetrisches und gleichmäßiges Einziehen der Oberfläche zu gewährleisten.

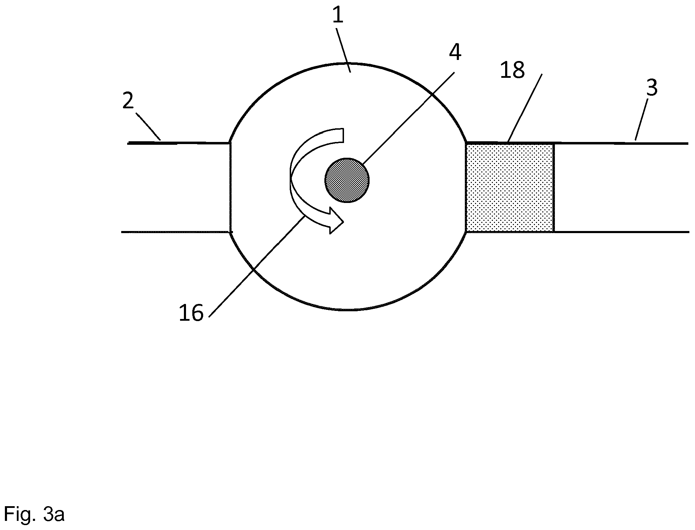

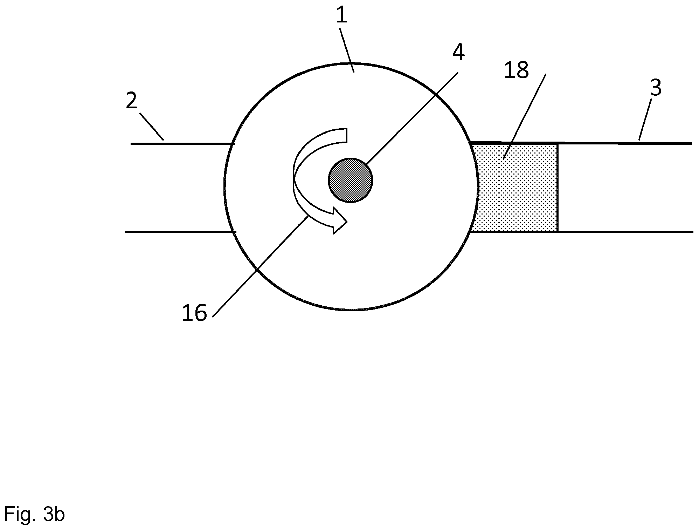

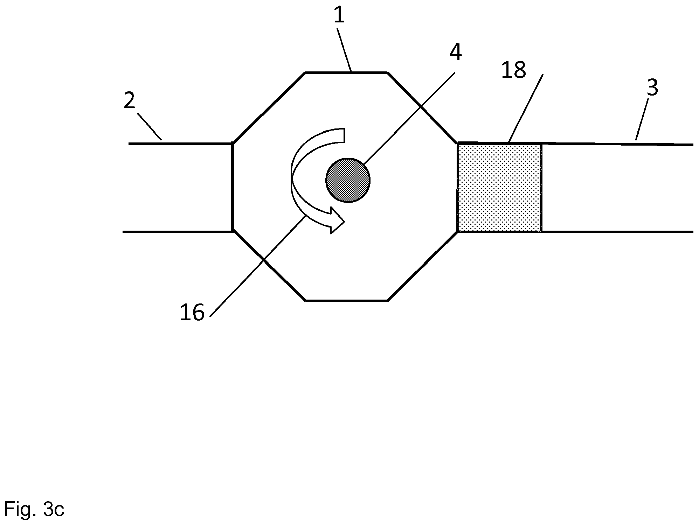

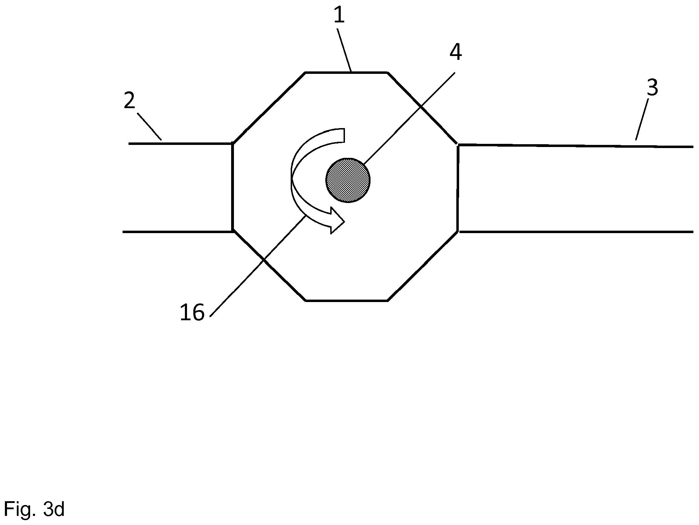

Die Figuren 3a bis 3d zeigen die Vorrichtung 1 aus Figur 2 von oben (ohne Darstellung der Rührflügel).

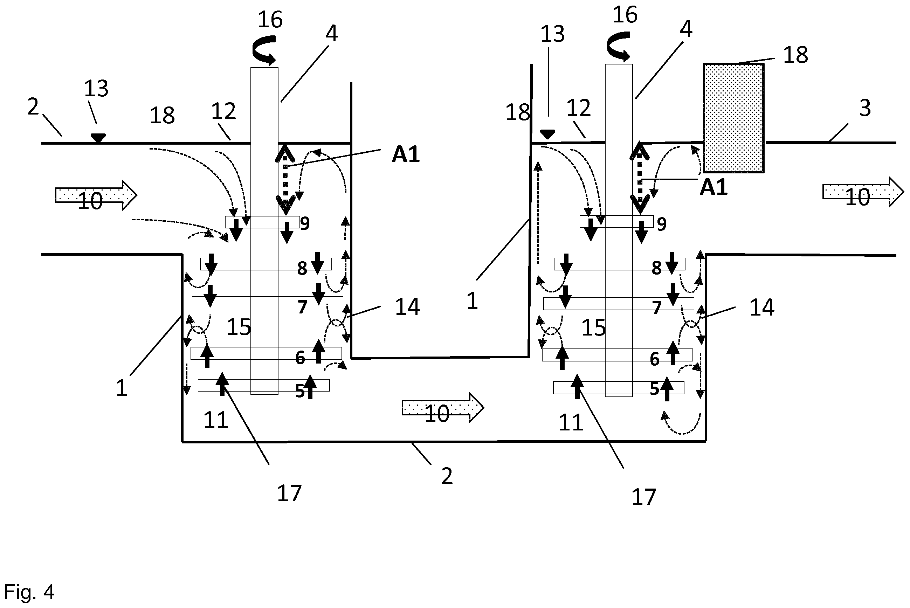

Figur 4 zeigt zwei Vorrichtungen 1, wobei zwei Rührgefäße (1) in Reihe angeordnet sind. Dadurch wird die Homogenisierungswirkung deutlich verbessert entsprechend der Gleichung für die Homogenitätszahl H.

Weitere Ausführungsvarianten:

A) Vorrichtung zur Durchführung des erfindungsgemäßen Verfahrens zur Herstellung eines Glasartikels wobei:

1. die Wandschubspannung kleiner als 500 Pa ist,
2. die Schwapp-Bewegung der Glasschmelzeoberfläche kleiner als 20 mm, bevorzugt kleiner als 10 mm ist,
3. der Flügelrührer aus Edelmetall oder aus einem edelmetallverkleideten Kern besteht,
4. die Glasschmelze in eine abgedeckte oder nicht abgedeckte Steinrinne und/oder Edelmetallrinne ausgeleitet wird.

B) Verfahren zur Herstellung eines Glasartikels wobei:
Flachglas und Substratglas für elektronische Anwendungen, bevorzugt für Flachdisplays hergestellt wird, wobei die streifenförmigen Höhenschwankungen der Glasoberfläche, als Waviness bezeichnet (RMS-Wert des Oberflächenprofils für Strukturbreiten zwischen 0,8 mm und 8 mm; vgl. SEMI D24-2000; Specification for glass substrates used to manufacture flat panel displays 2006), weniger als 200 nm, bevorzugt von weniger als 100 nm, weiter bevorzugt weniger als 70nm betragen.

Bezugszeichenliste:

1 Rührgefäß
2 Einlass (bzw. Durchfluss bei Doppelrührvorrichtung)
3 Auslass
4 Rührerwelle
5 Rührflügel aufwärtsfördernd
6 Rührflügel aufwärtsfördernd
7 Rührflügel abwärtsfördernd
8 Rührflügel abwärtsfördernd
9 Rührflügel abwärtsführend
10 Durchsatzströmung der Glasschmelze
11 Glasschmelze
12 Glasschmelze an der Oberfläche im Rührgefäß
13 Glasschmelzstand
14 Randspaltströmung und Strömungen der Glasschmelze durch Rührerbewegung (gestrichelte Pfeile)
15 Abstand zwischen den Rührflügeln, mit entgegengesetzter Förderwirkung
16 Drehrichtung des Rührers
17 Förderrichtung der Rührflügel (Pfeile an den Spitzen der Rührflügel)
18 Hängestein
A1 Abstand Glasschmelzstand bis Oberkante oberster Rührflügel

**Patentansprüche**

**1.** Verfahren zur Herstellung eines Glasartikels aus einer Glasschmelze, umfassend wenigstens die Schritte:

- kontinuierliches Einleiten der Glasschmelze (11) in ein Rührgefäß (1),
- Rühren der Glasschmelze (11) in dem Rührgefäß (1) mittels wenigstens einem Flügelrührer, wobei der Flügelrührer mehrere Rührflügel (5;6;7;8;9) aufweist, die an einer im Wesentlichen senkrecht im Rührgefäß (1) angeordneten Rührerwelle (4) befestigt sind, wobei der oberste Rührflügel (9) eine Abwärtsströmung der Glasschmelze entlang der Rührerwelle (4) und der unterste Rührflügel (5) eine Aufwärtsströmung der Glasschmelze entlang der Rührerwelle (4) erzeugt,
- kontinuierliches Ausleiten der Glasschmelze aus dem Rührgefäß (1),
- Formen der Glasschmelze unter Erhalt des Glasartikels,
**dadurch gekennzeichnet, dass**
- durch das Rühren die Glasschmelze (12), die sich an der Oberfläche im Rührgefäß (1) befindet, in das Rührgefäß eingezogen wird, so dass

die Bildung einer Oberflächenschicht der Glasschmelze mit einer anderen Zusammensetzung als die Zusammensetzung der eingeleiteten Glasschmelze (11) verhindert oder wenigstens minimiert wird, wobei der oberste Rührflügel (9) derart ausgestaltet und in einem Abstand A1 von der Oberfläche (13) der Glasschmelze im Rührgefäß (1) angeordnet ist, dass im Wesentlichen dadurch das Einziehen bewirkt wird, und
- durch das Rühren der Glasschmelze, die sich an der Oberfläche in dem Rührgefäß befindet, eine höchstens um den Faktor 10, vorzugsweise höchstens um den Faktor 5 höhere Durchlaufzeit durch das Rührgefäß aufweist als die übrige, durch das Rührgefäß geleitete Glasschmelze.

**2.** Verfahren nach Anspruch 1,
**dadurch gekennzeichnet,**
**dass** zwischen benachbarten Rührflügeln (5,6 bzw. 7,8,9), die eine gleichgerichtete Strömung der Glasschmelze entlang der Rührerwelle (4) erzeugen, ein kleinerer Abstand eingestellt wird als zwischen benachbarten Rührflügeln (6,7), die eine entgegen gerichtete Strömung der Glasschmelze entlang der Rührerwelle (4) erzeugen.

**3.** Verfahren nach einem der vorhergehenden Ansprüche,
**dadurch gekennzeichnet,**
**dass** das kontinuierliche Einleiten der Glasschmelze (11) in einem oberen Bereich des Rührgefäßes (1) und das kontinuierliche Ausleiten in einem unteren Bereich des Rührgefäßes (1) erfolgt oder umgekehrt.

**4.** Verfahren nach einem der vorhergehenden Ansprüche,
**dadurch gekennzeichnet,**
**dass** mehrere Rührgefäße (1) in Reihe angeordnet sind.

**5.** Verfahren nach einem der vorhergehenden Ansprüche,
**dadurch gekennzeichnet,**
**dass** durch das Rühren der Glasschmelze, die sich an der Oberfläche in dem Rührgefäß (1) befindet, eine maximale Amplitude der Auf- und Abbewegung der Glasschmelze an der Oberfläche von höchstens 2%, vorzugsweise höchstens 1% der Glasschmelzhöhe im Rührgefäß bei einer Rührerdrehzahl von 6 U/min bewirkt wird.

**6.** Verfahren nach einem der vorhergehenden Ansprüche
**dadurch gekennzeichnet,**
**dass** die Rührerdrehzahl im Bereich von 0,5 bis 20 U/min, bevorzugt im Bereich von 1 und 15 U/min und besonders bevorzugt im Bereich von 2 und 10 U/min eingestellt wird.

**7.** Verfahren nach einem der vorhergehenden Ansprüche,
**dadurch gekennzeichnet,**
**dass** das Formen der Glasschmelze ein Floaten, ein Walzen oder ein Ziehen der Glasschmelze umfasst.

## Claims

**1.** Method for producing a glass article from a glass melt, which comprises at least the following steps:

- continuous introduction of the glass melt (11) into a stirrer vessel (1),
- stirring the glass melt (11) in the stirrer vessel (1) by means of at least one blade stirrer, the blade stirrer having a plurality of stirrer blades (5; 6; 7; 8; 9) which are fixed to a stirrer shaft (4) arranged substantially vertically in the stirrer vessel (1), the uppermost stirrer blade (9) generating a downward flow of the glass melt along the stirrer shaft (4), and the lowest stirrer blade (5) generating an upward flow of the glass melt along the stirrer shaft (4),
- continuous discharge of the glass melt from the stirrer vessel (1),
- shaping the glass melt, obtaining the glass article,
**characterized in that**
- as a result of the stirring, the glass melt (12) which is located at the surface in the stirrer vessel (1) is drawn into the stirrer vessel, so that the formation of a surface layer of the glass melt with a different composition from the composition of the glass melt (11) introduced is prevented or at least minimized, the uppermost stirrer blade (9) being configured in such a way and being arranged at a distance A1 from the surface (13) of the glass melt in the stirrer vessel (1) such that the drawing-in action is substantially effected as a result, and
- as a result of the stirring of the glass melt which is located at the surface in the stirrer vessel has a passage time through the stirrer vessel which is higher at most by the factor 10, preferably at most by the factor 5, than the remaining glass melt led through the stirrer vessel.

**2.** Method according to Claim 1,
**characterized in that**
a smaller spacing is set between adjacent stirrer blades (5, 6 or 7, 8, 9) which generate a unidirectional flow of the glass melt along the stirrer shaft (4) than between adjacent stirrer blades (6, 7) which generate an opposed flow of the glass melt along the stirrer shaft (4).

**3.** Method according to one of the preceding claims, **characterized in that** the continuous introduction of the glass melt (11) is carried out in an upper region of the stirrer vessel (1), and the continuous discharge in a lower region of the stirrer vessel (1) or vice versa.

**4.** Method according to one of the preceding claims, **characterized in that** a plurality of stirrer vessels (1) are arranged in series.

**5.** Method according to one of the preceding claims, **characterized in that** as a result of the stirring of the glass melt which is located at the surface in the stirrer vessel (1), a maximum amplitude of the up-and-down movement of the glass melt at the surface of at most 2%, preferably at most 1%, of the glass melt level in the stirrer vessel at a stirrer rotational speed of 6 rev/min is effected.

**6.** Method according to one of the preceding claims, **characterized in that** the stirrer rotational speed is set in the range from 0.5 to 20 rev/min, preferably in the range of 1 to 15 rev/min, and particularly preferably in the range of 2 to 10 rev/min.

**7.** Method according to one of the preceding claims, **characterized in that** the shaping of the glass melt comprises floating, rolling or drawing the glass melt.


**Revendications**

**1.** Procédé de fabrication d'un article en verre à partir d'un verre en fusion, le procédé comprenant au moins les étapes suivantes :

- introduire en continu du verre en fusion (11) dans un récipient agitateur (1),
- agiter le verre en fusion (11) dans le récipient agitateur (1) au moyen d'au moins un agitateur à pales, l'agitateur à pales comportant une pluralité de pales d'agitation (5 ; 6 ; 7 ; 8 ; 9) qui sont fixées à un arbre d'agitation (4) disposé sensiblement verticalement dans le récipient agitateur (1), la pale d'agitation la plus haute (9) produisant un écoulement vers le bas du verre en fusion le long de l'arbre d'agitation (4) et la pale d'agitation la plus basse (5) produisant un écoulement vers le haut du verre en fusion le long de l'arbre d'agitation (4),
- faire sortir en continu le verre en fusion du récipient agitateur (1),
- mettre le verre en fusion en forme pour obtenir l'article en verre,
**caractérisé en ce que**
- l'agitation permet d'introduire le verre en fusion (12), situé à la surface du récipient agitateur (1), dans le récipient agitateur de manière à empêcher ou au moins minimiser la formation d'une couche de surface du verre en fusion ayant une composition autre que la composition du verre en fusion introduit (11), la pale d'agitation la plus haute (9) étant conçue et disposée à une distance A1 de la surface (13) du verre en fusion dans le récipient agitateur (1) de manière à provoquer ainsi sensiblement l'introduction et
- l'agitation du verre en fusion, qui se trouve à la surface dans le récipient agitateur, permet a un temps de transit dans le récipient agitateur qui est supérieur d'un facteur 10 maximum, de préférence d'un facteur 5, à celui du reste de verre en fusion déjà passé dans le récipient agitateur.

**2.** Procédé selon la revendication 1, **caractérisé en ce que** une distance entre les pales d'agitation adjacentes (5, 6 ou 7, 8, 9), qui produisent un écoulement de même sens du verre en fusion le long de l'arbre d'agitation (4), est réglée pour être plus petite qu'entre les pales d'agitation adjacentes (6, 7) qui produisent un écoulement de sens contraire du verre en fusion le long de l'arbre d'agitation (4).

**3.** Procédé selon l'une des revendications précédentes, **caractérisé en ce que** l'introduction continue du verre en fusion (11) est effectuée dans une région supérieure du récipient agitateur (1) et la sortie continue est effectuée dans une région inférieure du récipient agitateur (1), ou inversement.

**4.** Procédé selon l'une des revendications précédentes, **caractérisé en ce que** une pluralité de récipients agitateurs (1) sont disposés en série.

**5.** Procédé selon l'une des revendications précédentes, **caractérisé en ce que** l'agitation du verre en fusion, qui se trouve à la surface dans le récipient agitateur (1), permet une amplitude maximale du mouvement vers le haut et vers le bas du verre en fusion à la surface de 2 % maximum, de préférence de 1 % maximum, de la hauteur du verre en fusion dans le récipient agitateur pour une vitesse de rotation d'agitateur de 6 tours/min.

**6.** Procédé selon l'une des revendications précédentes,
**caractérisé en ce que**
la vitesse de rotation d'agitateur est réglée dans la plage de 0,5 à 20 tours/min, de préférence dans la plage de 1 à 15 tours/min, et de manière particulièrement préférée dans la plage de 2 à 10 tours/min.

7. Procédé selon l'une des revendications précédentes,
**caractérisé en ce que**
la mise en forme du verre en fusion comprend le flottage, le laminage ou l'étirage du verre en fusion.

EP 2 955 162 B1

16  4

13

2  13  18  12

A1

10

11

9

8

7

15

1

6

14

5

3

10

17

Fig. 1a

16  4

13

10

11

9

8

7

17

1

6

5

Fig. 1b

Fig. 1d

Fig. 1c

Fig. 2

Fig. 3a

Fig. 3b

Fig. 3c

Fig. 3d

EP 2 955 162 B1

Fig. 4

**IN DER BESCHREIBUNG AUFGEFÜHRTE DOKUMENTE**

**In der Beschreibung aufgeführte Patentdokumente**

- DE 102006060972 A1
- DE 102007035203 A1
- DE 19960212 A
- US 20130125591 A
- US 2871000 A
- EP 2505562 A